Europäisches Patentamt

European Patent Office

Office européen des brevets

(19)

(11) Numéro de publication: **0 300 860**

**A1**

(12) # DEMANDE DE BREVET EUROPEEN

(21) Numéro de dépôt: **88401644.5**

(22) Date de dépôt: **28.06.88**

(51) Int. Cl.⁴: **B 65 B 5/06**
**B 65 G 21/20**

(30) Priorité: **07.07.87 FR 8709609**

(43) Date de publication de la demande:
**25.01.89 Bulletin 89/04**

(84) Etats contractants désignés:
**AT BE CH DE ES GB GR IT LI LU NL SE**

(71) Demandeur: **COMPAGNIE GERVAIS-DANONE**
**126-130 rue Jules Guesde**
**F-92302 Levallois Perret (FR)**

(72) Inventeur: **Marcon, Lucienne**
**Avenue de Cos BP 216**
**F-82002 Montauban Cedex (FR)**

**Mayeur, Bernard**
**16, rue Léon Bloum**
**F-82000 Montauban (FR)**

**Mounie, Eric**
**Belpech l'Honor de Cos**
**F-82130 Lafrancaise (FR)**

(74) Mandataire: **Orès, Bernard et al**
**Cabinet ORES 6, Avenue de Messine**
**F-75008 Paris (FR)**

(54) **Procédé et machine automatique pour le groupage et la mise en barquette de récipients comme des pots, ou analogues.**

(57) La présente Invention est relative à un procédé et à une machine pour le groupage de récipients.

Le procédé selon l'Invention sert à la mise en barquette (b) de récipients (R), comme des pots ou analogues, entraînés côte à côte par un premier transporteur (14) et se caractérise en ce que l'on rassemble lesdits récipients suivant un groupe de n objets au même niveau, que l'on met en place à l'extrémité aval du premier transporteur (14) et sur le trajet de ce groupe une barquette (b) initalement immobile avant chargement par ledit groupe et en ce que l'on déplace ledit groupe dans son ensemble pour l'amener au droit de la barquette immobile par un mouvement audit niveau jusqu'à ce que la rencontre du groupe de récipients avec le fond et/ou les parois de la barquette fasse mouvoir celle-ci vers un second transporteur d'évacuation (60) de la barquette chargée.

FIG.6

EP 0 300 860 A1

**Description**

## PROCEDE ET MACHINE AUTOMATIQUE POUR LE GROUPAGE ET LA MISE EN BARQUETTE DE RECIPIENTS COMME DES POTS, OU ANALOGUES

L'invention a pour objet un procédé et une machine automatique pour le groupage et la mise en barquette de récipients comme des pots ou analogues.

On sait que pour le conditionnement, en particulier en vue de leur transport, de récipients comme des pots ou analogues, par exemple des bocaux de produits alimentaires, on réunit un certain nombre de pots dans une barquette en carton qui est ensuite enveloppée avec les pots qu'elle maintient groupés dans un film de matière thermorétractable permettant de manipuler tous les bocaux en tant qu'ensemble unitaire, soit pour la mise sur palette en vue de l'acheminement à un centre de distribution à partir d'un centre de fabrication, soit pour un emballage dans des caisses de carton ou d'autres suremballages.

Des machines qui effectuent ces opérations sont connues dans la technique sous le nom d'embarquetteuses et sont décrites, par exemple, dans FR-A-2 276 990, US-A-3 478 491 ou US-A-3 377 774. La machine selon le premier de ces documents comprend un chemin sur lequel sont poussés les récipients, en une ou deux files, un dispositif d'entraînement des rangées de récipients et des moyens d'amenée des barquettes sur une rampe montante disposee sous le chemin des récipients, un fonctionnement satisfaisant exigeant un synchronisme parfait, - et qui n'est pas ainsi à l'abri d'aléas -, des dispositifs d'entraînement des rangées des récipients et des moyens d'amenée des barquettes. Ces derniers comportent une rampe montante, faiblement inclinée par rapport à la direction du dispositif entraînant les rangées transversales de récipients, de sorte qu'il en résulte un encombrement de la machine qui peut être important, ce qui est un inconvénient pour la mise en place dans des unités de fabrication où l'espace au sol est mesuré.

Les machines décrites dans les second et troi sième documents sont prévues spécifiquement pour le chargement, dans des barquettes, de boîtes de conserve. Dans ces réalisations, également, les boîtes sont guidées sur un chemin faiblement incliné par rapport au trajet d'amenée des barquettes sous les boîtes, lesquelles tombent alors par gravité dans la barquette en étant plus ou moins freinées dans leur mouvement. Un synchronisme rigoureux est ici aussi nécessaire en ce qui concerne l'avance des boîtes et celle des barquettes, d'une part et, d'autre part, le système de chute, même freinée, des boîtes dans la barquette ne peut pas être mis en oeuvre pour des récipients comme des pots en verre capsulés sous vide et pasteurisés, étant donné que des bocaux en verre ne peuvent pas être soumis à des chocs susceptibles de les briser ou encore de faire cesser le vide à l'intérieur des récipients.

Le problème se pose donc de fournir un procédé et une embarquetteuse ou machine automatique pour le groupage et la mise en barquette de récipients comme des pots ou analogues, en particulier des bocaux en verre tels qu'utilisés dans l'industrie des conserves alimentaires et qui ne présentent pas les inconvénients des procédés et machines connus, mentionnés ci-dessus.

C'est, à cet égard, un but de l'invention de fournir un procédé et une telle machine de faible encombrement au sol, à fonctionnement sans aléas, et qui soit aisément modifiable pour la mise en barquettes de récipients de différentes dimensions ou/et groupés suivant des nombres variables d'éléments dans une même barquette.

Le problème est résolu par un procédé de mise en barquette de récipients, comme des pots ou analogues, entraînés côte à côte par un premier transporteur, et rassemblés suivant un groupe de $n$ objets que l'on déplace dans son ensemble pour l'amener au droit de la barquette immobile jusqu'à ce que la rencontre du groupe de réci pients avec le fond et/ou les parois de la barquette fasse mouvoir celle-ci vers un second transporteur d'évacuation de la barquette chargée, caractérisé, selon l'invention, en ce que les récipients rassemblés à un même niveau y demeurent jusqu'à leur chargement dans la barquette et au cours de leur évacuation.

Selon l'invention également, le problème est résolu, dans une machine automatique pour le groupage et la mise en barquette de récipients comme des pots ou analogues, comprenant des moyens pour rassembler lesdits récipients suivant un groupe de $n$ objet et des moyens pour déplacer ledit groupe dans son ensemble et le conduire au droit d'une barquette amenée obliquement par rapport au trajet d'entraînement des récipients jusqu'à un poste de chargement où la barquette est maintenue initialement immobile jusqu'à ce que la rencontre du groupe de récipients avec le fond et/ou les parois de la barquette fasse basculer celle-ci, vers un dispositif d'évacuation de la barquette chargée, la machine étant caractérisée en ce qu'elle comporte des organes de support desdits récipients à un niveau constant qui règnent entre les moyens prévus pour rassembler les récipients en groupe et le poste de chargement.

Dans une forme de réalisation préférée, les récipients à emballer sont supportés par le bord débordant de leur couvercle de fermeture et les organes de support des récipients par ces bords sont ménagés par des rails parallèles, conformés en section droite en correspondance de la forme des couvercles avec lesquels ils coopèrent écartés les uns des autres d'une distance correspondant au diamètre des couvercles, et disposés parallèlement au dispositif d'entraînement des rangées de récipients à un niveau correspondant à la hauteur desdits récipients.

Dans une forme de réalisation avantageuse, le dispositif d'entraînement des rangées de récipients est une bande transporteuse sans fin dont l'extrémité amont est en communication avec une ou des goulottes d'alimentation en récipients de l'embarquetteuse et dont l'extrémité aval s'arrête à courte distance des moyens de maintien en position fixe de la barquette en cours de chargement.

Selon une autre disposition avantageuse de l'invention, les moyens qui provoquent le déplacement d'ensemble d'un groupe de récipients pour l'amener au droit de la barquette immobile avant chargement comprennent un organe quelque peu analogue a un rateau à doigts éclipsables, attelé à un vérin, le mouvement dudit vérin dans le sens inverse de celui d'avance des récipients provoquant l'éclipsage des doigts pour le franchissement d'un groupe de récipients, tandis que lesdits doigts, - qui reprennent leur position opératoire dès franchissement des récipients les plus en amont du groupe -, sont propres à entraîner le groupe de récipients suivant un mouvement de coulissement lorsque le vérin est commandé en sens inverse, c'est-à-dire dans le sens d'avance général des récipients, de l'amont vers l'aval de la machine.

Selon une disposition judicieuse de l'invention, les moyens associés aux rails de support pour grouper les récipients suivant un ensemble de n objets sont ménagés par des portes d'admission amont et d'échappement aval, chacune comportant un nombre de butées égal à celui des rangées de récipients et qui sont commandées à partir de moyens de comptage, avantageusement du type inductif, pour définir un nombre pré-établi de colonnes et rangées de récipients.

Selon encore une autre caractéristiques de l'invention, la machine comprend, disposé latéralement par rapport au dispositif d'entraînement des rangées de ré cipients, un magasin de stockage des barquettes, préformées, auquel est associé un dispositif à vérin et à ventouses d'aspiration pour l'alimentation une à une des barquettes à charger a partir dudit magasin de stockage jusqu'au moyen de maintien immobile de chaque barquette au voisinage de l'extrémité aval du dispositif d'entraînement des rangées transversales de récipients.

Selon une autre caractéristique de l'invention, la machine comprend en outre un convoyeur d'évacuation des récipients mis en barquette, ledit convoyeur étant adjacent au moyen de maintien immobile de la barquette avant chargement et s'étendant au moins partiellement sous lesdits organes de support desdits récipients, le niveau desdits organes support par rapport au dispositif d'entraînement des récipients ainsi que leur écartement relatif étant réglables.

L'invention sera bien comprise par la description qui suit, faite à titre d'exemple et en référence au dessin annexé dans lequel :

- la figure 1 est une vue schématique partielle, en perspective, d'une machine selon l'invention ;

- la figure 2 en est une autre vue partielle, également en perspective ;

- la figure 3 est, elle aussi, une vue schématique partielle en perspective d'une partie de machine selon l'invention ;

- la figure 4 est une vue partielle, à plus grande échelle, d'une partie de la machine ;

- la figure 5 est une vus schématique, à encore plus grande échelle et en coupe, selon la ligne 5-5 de la figure 4 ;

- les figures 6a - 6d illustrent le fonctionnement de la machine.

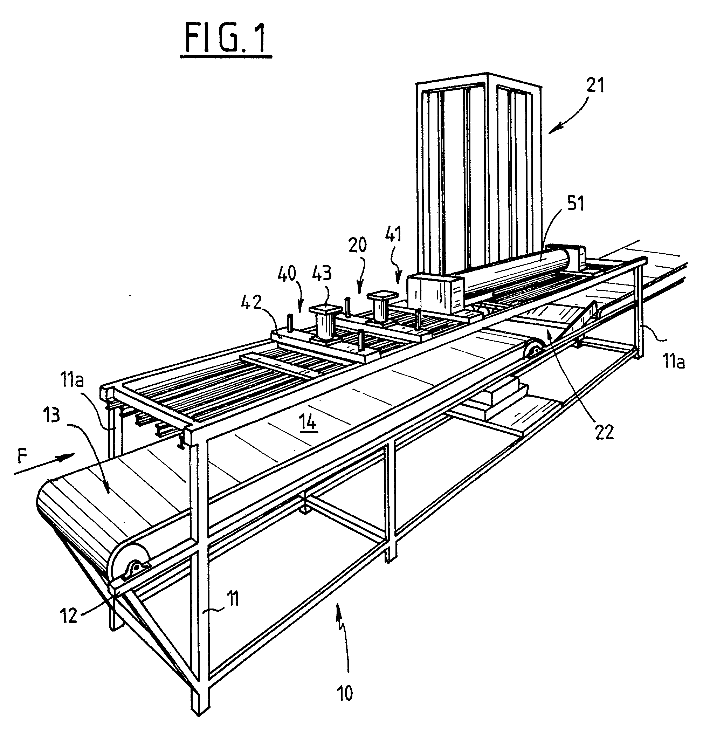

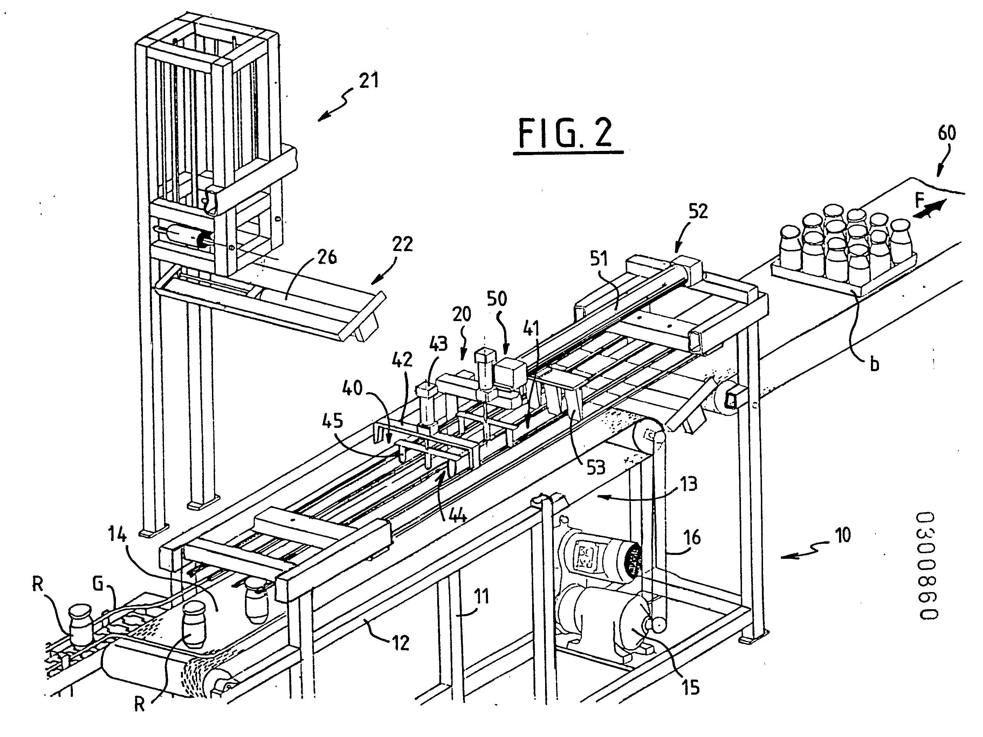

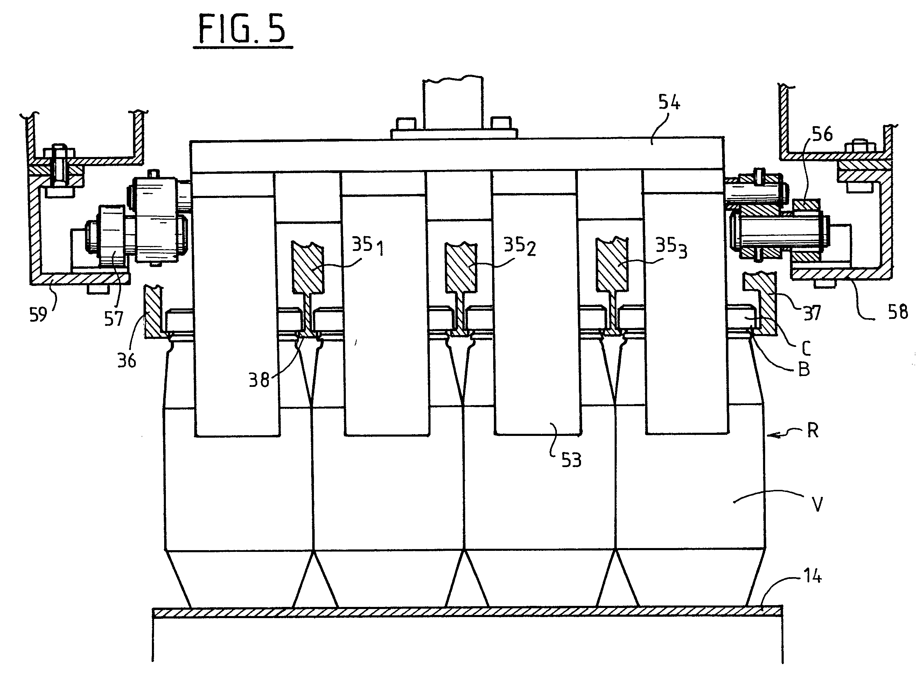

On se réfère d'abord aux figures 1 à 3 qui montrent les principales parties constitutives de la machine selon l'invention. Celle-ci comprend un bâti 10 dont les montants 11 et traverses 12 portent un convoyeur 13, ici sous forme d'une bande transporteuse sans fin, entraînée à partir d'un moteur 15 par une transmission 16 et dont le brin supérieur 14 sert à l'acheminement, dans le sens de la flèche F, des récipients R que la machine est destiné à grouper et à mettre en barquette. Les récipients R, par exemple des bocaux en verre V, fermés par des couvercles C débordant B, figure 5, et qui sont par exemple du type de ceux utilisés dans l'industrie des conserves alimentaires capsulés sous vide et pasteurisés sont amenés au convoyeur 13 à partir de goulottes G, figure 2.

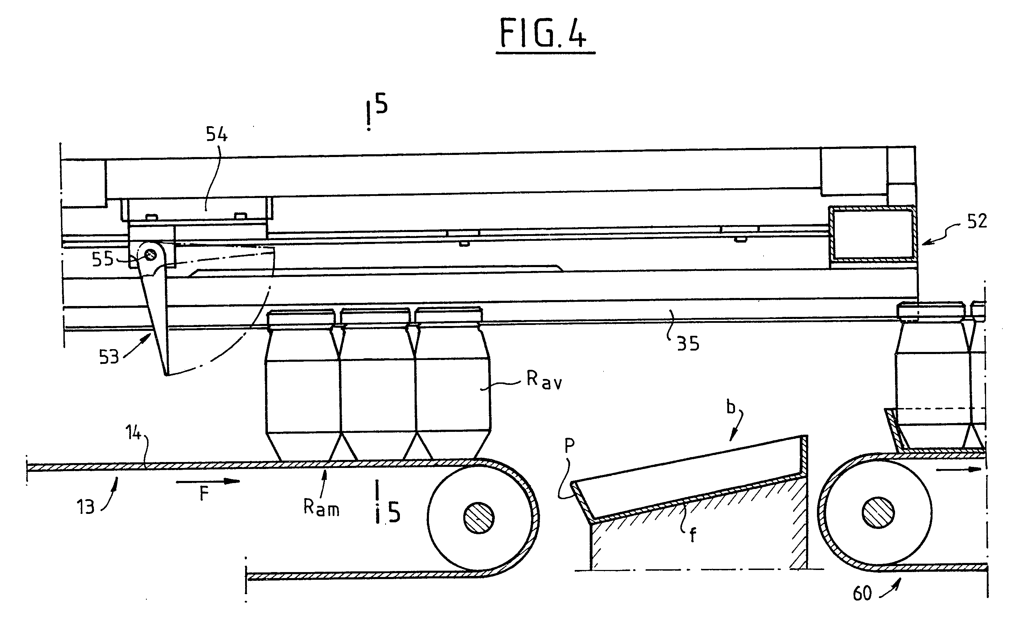

Au-dessus du convoyeur 13, et parallèlement à celui-ci, est prévu un ensemble de moyens 20, porté par des rehausses 11a des montants 11 du bâti et qui est destiné, comme il sera explicité ci-après, à guider, grouper, compter et transférer un ensemble de récipients R du convoyeur 13 à une barquette b en forme générale d'auget à fond f et parois latérales p, figure 4. Les barquettes b, avantageusement préformées préalablement à leur utilisation, sont stockées dans un magasin 21 disposé latéralement par rapport au convoyeur 13 et qui peut être aisément modifié pour accomoder des barquettes de formes et de dimensions différentes, en correspondance du nombre de récipients R à placer dans une barquette, par exemple douze dans l'exemple ici décrit et représenté d'un arrangement à quatre rangées et trois colonnes.

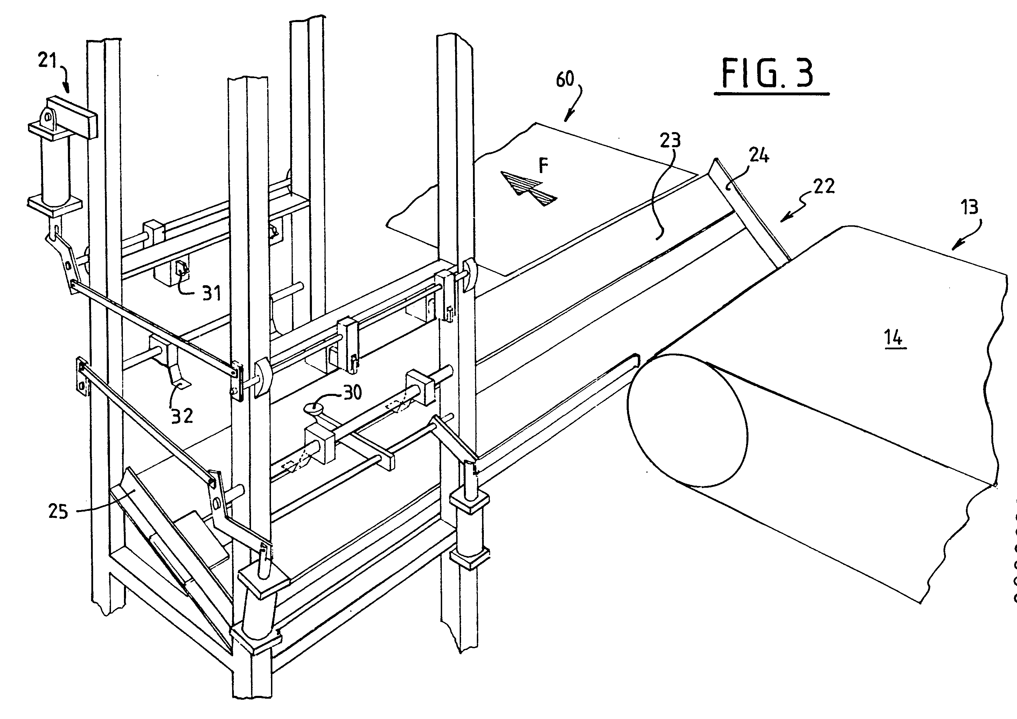

Sous le magasin 21 de barquettes b, est placé un support 22, figures 2 et 3, qui s'étend jusqu'à l'extrémité aval du convoyeur 13 et qui est constitué principalement par une surface plane 23, inclinée par rapport au plan du brin 14 du convoyeur et fermée à son extrémité distante du magasin 21 par un retour 24, l'autre extrémité étant fermée par un retour 25 d'un tiroir mobile propre à se déplacer parallèlement à lui-même sous l'action d'un vérin 26 qui lui est attelé pour transférer une barquette, issue du magasin 21, en regard du convoyeur 13 où elle est maintenue immobile, en butée contre le retour 24, avant le chargement en récipients. Les barquettes préformées b réunies en pile dans le magasin 21 y sont maintenues par des chiens d'arrêt 31 et des taquets 32 et elles sont extraites une à une à la partie inférieure de la pile par un dispositif à ventouse pneumatique 30, en soi connu, qui les place sur la surface inclinée 23 d'où elles sont transférées par le tiroir 25 au voisinage de l'extrémité aval du convoyeur 13 avec leur fond f incliné sur le plan horizontal du brin supérieur 14 du convoyeur, comme bien montré sur la figure 4.

Cette position relative de la barquette et du convoyeur 13 permet, comme il sera explicité ci-après, de garnir ladite barquette en récipients R sans craindre de chocs d'une part et, d'autre part, sans exiger de fonctionnement synchrone de l'alimentation des barquettes et des récipients, étant donné qu e la barquette est immobile avant son chargement. Pour effectuer ce dernier, les moyens 20 comprennent des organes de support des récipients R par le bord B de leur couvercle C, figure 5, réalisés ici, le plus simplement, par des rails $35_1$ , $35_2$ , $35_3$ et des guides latéraux 36 et 37, parallèles les uns aux autres et garnis d'un matériau anti-friction, comme du DELRIN (une marque déposée de la Société DU PONT DE NEMOURS). Les rails et guides latéraux sont conformés pour ménager des ailes 38 de support des bords de couvercle par leur partie inférieure, ont un écartement relatif correspondant au diamètre des couvercles et sont placés de manière telle que la distance des ailes 38 au brin supérieur 14 du convoyeur permette le coulissement des couvercles entre les rails, lors de l'entraînement par le convoyeur 13, tout en assurant le support des couvercles et par conséquent des récipients qu'ils équipent lorsque . lesdits récipients échappent au convoyeur comme il sera explicité ci-après.

Pour rassembler lesdits récipients, entraînés par le convoyeur 13, suivant des groupes de n objets, l'invention prévoit d'associer aux rails 35 et aux guides 36 et 37 qui les répartissent suivant des rangées alignées côte à côte, deux portes, l'une d'admission 40, à l'amont de la machine, - dans le sens de déplacement des récipients -, et l'autre, 41, à l'aval de la machine, chacune d'entre elles étant constituée comme montré schématiquement sur les figures 1 et 2, c'est-à-dire, par exemple pour la porte 40, par un portique 42 sur lequel est fixé un vérin 43 d'actionnement d'une herse 44 à taquets de butée 45. Sous l'action du vérin 43 les taquets 45 peuvent êtres animés d'un mouvement vertical de translation qui les amène entre les rails 35 et les guides 36, 37 à une profondeur suffisante, pour arrêter les récipients entraînés par le brin 14 du convoyeur 13 ou, au contraire, les retire à une hauteur suffisante pour livrer passage auxdits récipients. La structure de la porte d'échappement 41 est identique à celle qui vient d'être décrite de sorte que, en associant auxdites portes des moyens de comptage, avantageusement du type inductif, on regroupe entre la porte d'échappement 41 et la porte d'admission 40, un nombre n de récipients correspondant au chargement d'une barquette, à savoir, ici, douze récipients R disposés en quatre rangées de trois récipients chacune.

Les moyens pour ensuite déplacer un groupe de n récipients en tant qu'ensemble unitaire et pour charger lesdits récipients dans la barquette b sont montrés sur les figures 2, 4 et 5. Ils comprennent un dispositif quelque peu analogue à un rateau 50, attelé à une extrémité d'un vérin horizontal 51 dont l'autre extrémité est fixée au bâti 10 par un cadre 52. La tête 54 du rateau 50 porte des dents 53, montées à pivotement autour d'axes 55 et est guidée dans son mouvement de va et vient par des galets 56 et 57 roulant sur des chemins 58 et 59, respectivement, placés parallèlement aux rails 35 sur les deux bords longitudinaux de la machine. Comme montré schématiquement sur la figure 4, les doigts 53 sont montés sur leurs axes 55 pour pouvoir pivoter dans le sens inverse des aiguilles d'une montre lorsque le vérin 51 déplace le rateau 50 dans le sens inverse de celui de la flèche F, - ce qui fait échapper lesdits doigts aux récipients R -, tandis que lors du mouvement en sens inverse du vérin, c'est-à-dire dans le sens de la flèche F, les doigts 53 ne peuvent s'éclipser et, venant au contact de la colonne de récipients Ram la plus en amont du groupe de n récipients, s'appuient sur ceux-ci et entraînent le groupe en tant qu'ensemble unitaire.

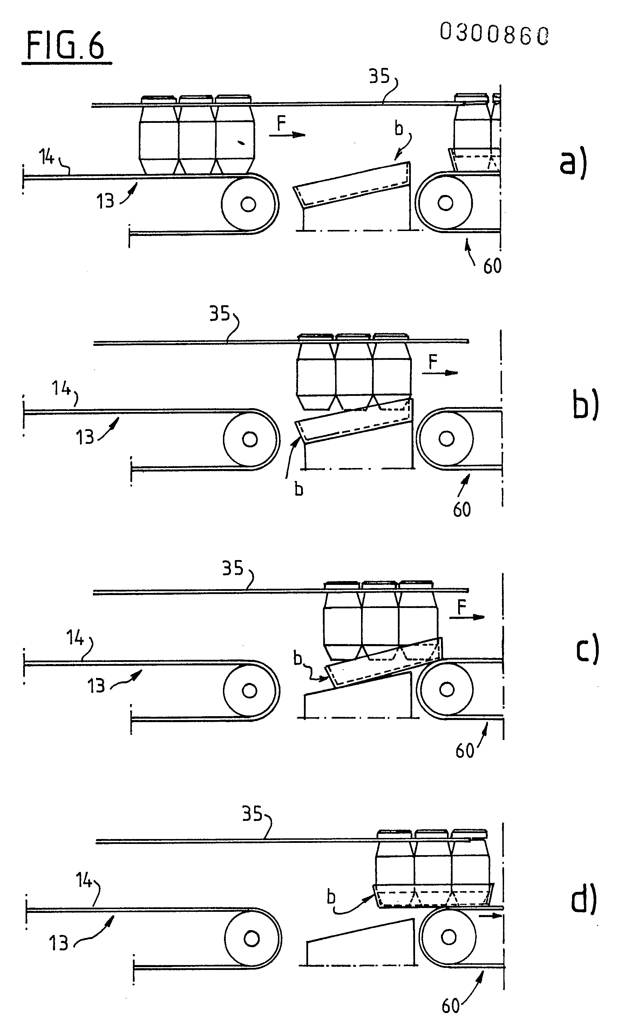

Le fonctionnement d'une machine selon l'invention résulte immédiatement de ce qui précède. A sa mise en route, le magasin 21 est garni de barquettes préformées ou est relié à un dispositif de formage et d'encollage de barquettes à partir de flans de cartons livrés à plat. La porte d'échappement aval 41 est fermée, ses taquets de butée 45 étant positionnés entre les rails 35 et les guides latéraux 36 et 37. Les récipients R amenés par les goulottes G sont pris en charge par le convoyeur 13 qui les fait se déplacer dans le sens de la flèche F pour amener les couvercles C à l'entrée des rails 35 et des guides 36, 37 au cours de la progression dans le sens de la flèche F : une première colonne de récipients Rav vient au contact des taquets de butée de la porte d'échappement 41 et lorsque les moyens de comptage, non représentés, ont déterminé le nombre souhaité de colonnes de récipients, trois dans l'exemple décrit, ils déclenchent la fermeture de la porte amont 40, de sorte que les recipients R déjà canalisés entre les rails 35 et les guides 36, 37 ne peuvent pas progresser davantage. En même temps que se déroule cette phase de regroupement des récipients sur le convoyeur 13, la barquette inférieure de la pile de barquettes du magasin 21 a été extraite du magasin et transférée, par le tiroir 25 à vérin 26, en regard de l'extrémité du convoyeur 13, et la condition d'ensemble est comme montrée sur la figure 6a. A partir de cette condition, et après que le nombre de récipients groupés ait été vérifié, par exemple à l'aide de capteurs optiques, un automatisme à programme, non représenté, commande l'ouverture de la porte d'échappement aval 41 et le vérin 51, qui était dans sa condition rétractée, est actionné pour déplacer le rateau 50 dans le sens inverse de la flèche F : lorsque les doigts 53 solidaires de la tête 54 du rateau viennent au contact de la colonne de récipients Rav ils pivotent dans le sens inverse des aiguilles d'une montre, ce qui n'interrompt pas la progression du rateau, et lorsque les doigts 53 échappent à la colonne de récipients Ram, ils se déploient à nouveau pour prendre la position montrée en trait plein sur la figure 4. Le vérin 51 est a nouveau actionné, à partir de cette condition, mais pour un déplacement dans le sens de la flèche F, de sorte que les doigts 53 entraînent le groupe de récipients supportés par leurs couvercles sur les rails 35 et guides 36, 37 jusqu'à faire échapper ceux-ci au brin 14 du convoyeur 13 : la condition est alors celle montrée sur la figure 6b, en laquelle le groupe de récipients est sensiblement à l'aplomb de la barquette b immobile sur le support incliné 23, la porte d'échappement 41 refermée et la porte d'admission 40 réouverte pour procéder à un nouveau groupage de récipients. A partir de cette condition, le mouvement du rateau 50 se poursuit dans le sens de la flèche F et le groupe entraîné par le rateau 50 poursuivant sa progression il atteint la position montrée sur la figure 6c en laquelle les récipients Rav du groupe entraînent la barquette b sur un convoyeur d'évacuation 60 adjacent au support incliné 23. Le mouvement d'avance sous l'action du rateau 50 continuant, la barquette b pivote légèrement, quitte le support 23 sur lequel elle était maintenue immobile et lorsque la condition est celle montrée sur la figure 6d, ou sensiblement celle-ci, le vérin 51 est à nouveau dans sa condition rétractée ou quasiment telle : les récipients R échappent aux rails et guides de support qui règnent jusqu'au droit de l'extrémité amont du convoyeur 60 et lesdits récipients poursuivent leur chemin sur le convoyeur 60 dans la barquette b jusqu'à un poste de mise en place d'un film thermo-rétractable. Le vérin 51 est alors de nouveau actionné, en sens inverse, pour venir chercher un nouveau groupe de récipients formé entre temps, cependant qu'une nouvelle barquette b est mise en place à l'extrémité du convoyeur 13, en temps masqué.

La machine selon l'invention, dont le fonctionnement est à la fois simple et sûr, est particulièrement intéressante pour le conditionnement de récipients contenant des produits pasteurisés tels que mis en oeuvre dans les conserveries et autres usines de l'industrie alimentaire où elle trouve application quels que soient les récipients a mettre en barquette, des moyens de réglage, non représentés, permettant de modifier l'écartement des rails 35 et des guides 36, 37 pour l'adapter à des récipients fermés par des couvercles ou capsules de diamètres différents, tandis qu'un réglage de la distance séparant les moyens 20 du convoyeur 13, assure l'adaptation à la hauteur desdits récipients.

**Revendications**

1.- procédé de mise en barquette de récipients, comme des pots ou analogues, entraînés côte à côte par un premier transporteur, et rassemblés suivant un groupe de n objets que l'on déplace dans son ensemble pour l'amener au droit de la barquette immobile jusqu'à ce que la rencontre du groupe de récipients avec le fond et/ou les parois de la barquette fasse mouvoir celle-ci vers un second transporteur d'évacuation de la barquette chargée, caractérisé en ce que les récipients rassemblés à un même niveau y demeurent jusqu'à leur chargement dans la barquette et au cours de leur évacuation.

2.- Machine automatique pour le groupage et la mise en barquette de récipients comme des pots ou analogues, comprenant des moyens pour rassembler lesdits récipients suivant un groupe de n objets et des moyens pour déplacer ledit groupe dans son ensemble et l'amener au droit d'une barquette amenée obliquement par rapport au trajet d'entraînement des récipients jusqu'à un poste de chargement, où la barquette est maintenue initialement immobile jusqu'à ce que la rencontre du groupe de récipients avec le fond et/ou les parois de la barquette, fasse basculer celle-ci vers un dispositif d'évacuation de la barquette chargée, caractérisée en ce qu'elle comporte des organes (35, 36, 37) de support desdits récipients (R), à un niveau constant qui règnent entre les moyens (40, 41) prévus pour rassembler les récipients en groupe et le poste de chargement.

3.- Machine selon la revendication 2, caractérisée en ce que les récipients à emballer sont supportés par le bord débordant (B) de leur couvercle de fermeture (C) et en ce que les organes de support des récipients (R) par ces bords (B) sont ménagés par des rails (35) et des guides (36, 37) parallèles, conformés en section droite en correspondance de la forme des couvercles avec lesquels ils coopèrent, écartés les uns des autres d'une distance correspondante au diamètre des couvercles et disposés parallèlement au dispositif d'entraînement (13) des rangées de récipients (R) à un niveau correspondant à la hauteur desdits récipients.

4.- Machine selon la revendication 2 ou 3, caractérisée en ce que les moyens qui provoquent le déplacement d'ensemble d'un groupe de récipients (R) pour l'amener au droit de la barquette immobile (b) avant du chargement, comprennent un organe d type rateau, à doigts (53) éclipsables, attelé à un vérin (51), le mouvement de coulissement dudit vérin dans le sens inverse de celui d'avance des récipients (R) provoquant l'éclipsage des doigts pour le franchissement d'un groupe de récipients, tandis que lesdits doigts, - qui reprennent leur position opératoire dès franchissement des récipients (Ram) les plus en amont du groupe -, sont propres à entraîner ledit groupe de récipients lorsque le vérin est commandé en sens inverse, c'est-à-dire dans le sens d'avance général des récipients (R) de l'amont vers l'aval de la machine.

5.- Machine selon l'une quelconque des revendications 2 à 4, caractérisée en ce que les moyens associés aux rails et guides de support (35, 36, 37) pour grouper les récipients suivant un ensemble de n objets sont ménagés par des portes d'admission amont (40) et d'échappement aval (41) chacune comportant un nombre de taquets de butée (45) égal à celui des rangées de récipients (R) lesquels sont comptés à l'aide de moyens de comptage, avantageusement du type inductif, pour définir un nombre pré-établi de colonnes et rangées de récipients.

6.- Machine selon l'une quelconque des revendications 2 à 5, caractérisée en ce qu'elle comprend, disposés latéralement par rapport au dispositif d'entraînement (13) des rangées de récipients, un magasin de stockage (21), des barquettes préformées (b) auquel est as socié un dispositif à ventouse pneumatique d'aspiration (30) et un tiroir (25) à vérin (26) pour l'alimentation une à une des barquettes a charger à partir dudit magasin de stockage jusqu'au moyen de maintien immobile de chaque barquette au voisinage de l'extrémité aval du dispositif d'entraînement (13) des rangées transversales de récipients (R).

7.- Machine selon l'une quelconque des revendications 2 à 6, caractérisée en ce qu'elle comprend en outre un convoyeur (60) d'évacuation des récipients (R) mis en barquette (b), ledit convoyeur (60) étant adjacent au moyen (23) de maintien immobile de la barquette (b) avant chargement et s'étendant au moins partiellement sous lesdits organes de support (35, 36, 37) desdits récipients.

8.- Machine selon l'une quelconque des revendications 2 à 8, caractérisée en ce que le niveau desdits organes support (35, 36, 37) par rapport au dispositif d'entraînement (13) des récipients ainsi que leur écartement relatif sont réglables.

0300860

## FIG.1

FIG. 2

FIG. 3

0300860

FIG.4

# FIG.5

0300860

# FIG.6

0300860

a)

b)

c)

d)

| | | | |
|---|---|---|---|
| Office européen des brevets | **RAPPORT DE RECHERCHE EUROPEENNE** | Numero de la demande | |

EP 88 40 1644

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | US-A-3 377 774 (B. NIGRELLI) <br> * Colonne 4, ligne 67 - colonne 5, ligne 69; figures * <br> ----- | 1,2 | B 65 B   5/06 <br> B 65 G  21/20 |
| | | | **DOMAINES TECHNIQUES RECHERCHES (Int. Cl.4)** <br><br> B 65 B <br> B 65 G |

Le présent rapport a été établi pour toutes les revendications

| Lieu de la recherche | Date d'achèvement de la recherche | Examinateur |
|---|---|---|
| LA HAYE | 13-10-1988 | JAGUSIAK A.H.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)